# EUROPEAN PATENT APPLICATION

(11) **EP 1 980 775 A2**
(43) Date of publication of application: **15.10.2008**
(21) Application number: 08007035.2
(22) Date of filing: 09.04.2008
(51) Int. Cl.: F16K 17/10, F16K 31/122, F04B 49/03, F04B 49/10

(54) **Miniflow valve**

(30) Priority: 13.04.2007 JP 2007106369
(71) Applicant: Mitsubishi Heavy Industries, Ltd., Tokyo 108-8215 (JP)
(72) Inventor: Ogino, Shinji, Mihara Hiroshima-ken 729-0393 (JP); Hamamoto, Takeshi, Mihara Hiroshima-ken 729-0393 (JP)
(74) Representative: HOFFMANN EITLE

(57) **Abstract**

In a miniflow valve which is disposed in a miniflow pipe that is connected between the discharge side and suction side of a main pipe where a liquid fed under pressure by a centrifugal pump circulates, and which is opened when the head of the centrifugal pump has exceeded a predetermined value, thereby to return a fluid from the discharge side onto the suction side through the miniflow pipe; a miniflow valve including a pilot valve which is opened or closed on the basis of the differential pressure between the discharge side pressure and suction side pressure of the liquid, and a main valve which is opened or closed in accordance with the opening or closing operation of the pilot valve. The miniflow valve has the simple configuration, and can be opened or closed at a high precision.

## Description

### BACKGROUND OF THE INVENTION

### 1. FIELD OF THE INVENTION

The present invention relates to a miniflow valve which is disposed in a miniflow line that serves to ensure a minimum flowrate for protecting a pump feeding a liquid under pressure.

This application is based on Japanese Patent Application No. 2007-106369, the content of which is incorporated herein by reference.

### 2. DESCRIPTION OF RELATED ART

Pumps such as a centrifugal pump are often used in order to feed water or the like liquid under pressure. If, in a case where a predetermined discharge flowrate cannot be ensured, for example, in a case where the discharge side of the pump is closed up, the pump is continued to run as it is, there will occur the drawback that the liquid circulates within the pump to undergo an abnormal temperature rise. In order to avoid such a drawback, a miniflow line is laid between the discharge side and suction side of the pump. The miniflow line is configured of a bypass pipe which connects the discharge side and suction side of the pump, and a miniflow valve which is disposed in the bypass pipe. Owing to the laying of such a miniflow line, in the case where a flowrate on the discharge side of the pump has become the predetermined flowrate or less, the miniflow valve is opened to bypass the liquid from the discharge side onto the suction side of the pump, whereby a minimum flowrate (miniflow) for pump protection is ensured.

An apparatus which applies such a miniflow line is a control device for a minimum-flowrate bypass valve as stated in Japanese Unexamined Patent Application, Publication No. Hei 7-208346 (hereinafter referred to as "Patent Document 1"). The minimum-flowrate bypass valve disclosed in the document is controlled by a control circuit which performs a calculation by obtaining the output signal of a flowrate meter disposed on the discharge side of the pump and the output signal of the drive current of a motor for driving the pump.

The control device for the minimum-flowrate bypass valve as stated in Patent Document 1 needs to include the control circuit which performs the calculation by obtaining the output signal of the flowrate meter, etc. Therefore, the configuration of the apparatus becomes complicated due to signal wiring, etc., and reduction in the cost thereof is hampered. Besides, in a case where the apparatus is employed for a comparatively large-scale plant, it is sufficiently payable in spite of the introduction of such a control circuit, but in an installation which adopts a small-sized pump having an output lower than, for example, 100 m³/h, a system including any electrical control device becomes an excess performance, and hence, actually the introduction is difficult.

Therefore, a configuration wherein an orifice being a stationary throttle is disposed in a miniflow line so as to always bypass a partial flowrate irrespective of the discharge flowrate of the pump has been adopted as the miniflow line which does not include any electrical control device. With the configuration, however, the wasteful flowrate is always kept flowing through the bypass line even at the time of rating, so that a running cost increases. Further, a pump having a rated flowrate in which the bypass flowrate is added is inevitably selected, and a small pump cannot be selected, so that an installation cost increases.

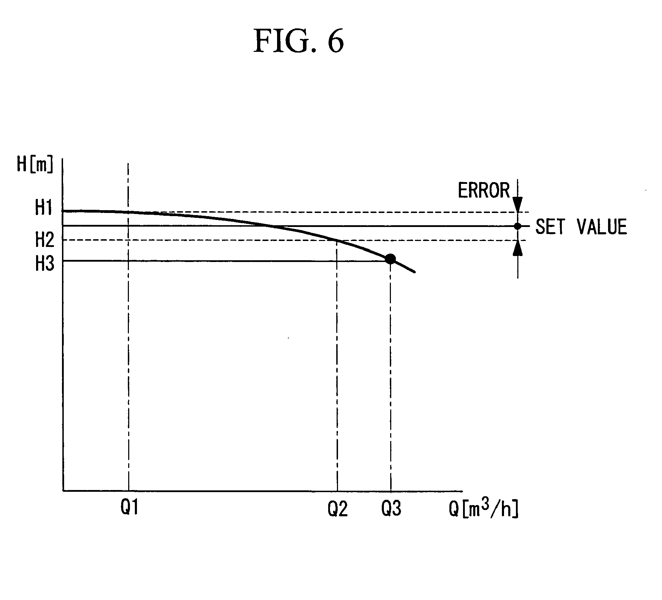

On the other hand, it is considered to adopt a safety valve or an automatic pressure regulation valve which operates at or above a predetermined discharge pressure, instead of the orifice disposed in the miniflow line. Since, however, the safety valve or the automatic pressure regulation valve is configured so as to be opened directly by the discharge pressure of the liquid, a valve opening timing cannot be set at a high precision. In accordance with, for example, JIS (Japanese Industrial Standard) concerning safety valves, a precision of within ±5% is stipulated, but it is unsatisfactory as the precision required of the miniflow valve. The reasons therefor will be described with reference to FIG. 6.

The figure is a graph showing the characteristic of a typical centrifugal pump, and the axis of abscissas represents a flowrate Q (m³/h), while the axis of ordinates represents a head H (m). As shown in the figure, the characteristic of the centrifugal pump becomes a curve in a shape lying down, and especially at a small flowrate, the change of the head is small versus that of the flowrate. Accordingly, the set opening degree of the miniflow valve needs to be set at the upper maximum error of the miniflow valve in order that the miniflow valve may be reliably opened at a head H1 corresponding to a minimum flowrate Q1 for pump protection. Then, at the lower maximum error of the miniflow valve, the set opening degree corresponds to a flowrate Q2 being much larger than the minimum flowrate Q1, and the miniflow valve is opened at the large flowrate Q2. Consequently, the rated running point of the centrifugal pump is inevitably set at a flowrate Q3 larger than the flowrate Q2, in other words, at a head H3 smaller than a head H2. That is, there is the problem that the rated running point is inevitably set at the low head in the miniflow valve of low precision.

Further, the safety valve or the automatic pressure regulation valve is opened by only the discharge side pressure of the pump. Therefore, in a case where the pressure of the discharge side of the pump has fluctuated greatly for any reason, there is anticipated the drawback that the miniflow valve will be unintentionally opened.

### BRIEF SUMMARY OF THE INVENTION

The present invention has been made in view of such circumstances, and it has for its object to provide a miniflow valve which has a simple configuration and which can be opened and closed at a high precision.

In order to solve the problems, the miniflow valve of the invention adopts means to be stated below.

The invention provides a miniflow valve which is disposed in a bypass pipe that is connected between a discharge side and a suction side of a main pipe where a liquid fed under pressure by a pump circulates, and which is opened when a head of the pump has exceeded a predetermined value, thereby to return the liquid from the discharge side onto the suction side through the bypass pipe, including a pilot valve which is opened and closed on the basis of a differential pressure between a discharge side pressure and a suction side pressure of the liquid, and a main valve which is opened and closed in accordance with opening and closing operations of the pilot valve.

The opening and closure of the main valve are determined by the pilot valve which is opened and closed by the differential pressure between the discharge side pressure and suction side pressure of the liquid, so that the differential pressure at which the miniflow valve works can be adjusted at a high precision. Accordingly, the precision can be made remarkably higher as compared with that of a safety valve or an automatic pressure regulation valve which is directly driven by the pressure of the liquid discharged from the pump.

It is also allowed to adopt a configuration in which the pilot valve includes a diaphragm that is deformed when the differential pressure has exceeded the predetermined value, whereby the liquid is caused to flow onto a side of the main valve; and the main valve is opened by a pressure of the liquid led by the diaphragm.

In this manner, in addition to the pilot valve including the diaphragm which is deformed by the differential pressure and which leads the liquid onto the side of the main valve, the main valve is configured so as to be opened by the pressure of the liquid led by the diaphragm, whereby the miniflow valve operates by itself in a mechanical scheme. Accordingly, an electric control need not be performed using an output signal from a flowrate sensor or a pressure sensor, so that the miniflow valve can be provided inexpensively with the simple configuration.

The pilot valve and the main valve may well be arranged in a common housing.

The miniflow valve can be configured into a compact structure by arranging the pilot valve and the main valve in the common housing in this manner.

The miniflow valve of the invention may well include a diaphragm receiver piece which abuts on one side of the diaphragm; wherein the diaphragm receiver piece is urged onto the side of the diaphragm by an elastic member.

In this case, the diaphragm receiver piece is urged onto the side of the diaphragm by the elastic member, whereby the differential pressure at which the diaphragm operates can be set. Incidentally, a coiled spring, for example, can be employed as the elastic member.

The miniflow valve of the invention is characterized in that an urging force based on the elastic member is adjustable by altering an installation length of the elastic member.

By way of example, the installation position of the spring receiver which receives one end of the coiled spring being the elastic member is altered by an adjustment screw or the like, whereby the installation length of the coiled spring can be altered. The urging force based on the elastic member is made adjustable by altering the installation length of the elastic member in this way, so that the working differential pressure of the pilot valve can be finely adjusted.

In the miniflow valve of the invention, the elastic member may well be replaceable.

The elastic member is made replaceable, whereby it can be altered to an elastic member having a different elastic force. Thus, the force urging the diaphragm can be altered, so that the differential pressure at which the pilot valve works can be set in a wide range.

The miniflow valve of the invention may well adopt a wafer connection structure in which the miniflow valve proper is connected with both its sides held by flanges that are disposed in the bypass pipe.

Owing to the adoption of the wafer connection in which the miniflow valve proper is connected in the state where both its sides are held by the flanges of the bypass pipe, the miniflow valve can be connected without depending upon the rating of the flanges of the bypass pipe.

Moreover, since the miniflow valve proper need not be formed with the flanges, the weight thereof can be decreased, and the miniflow valve can be provided inexpensively.

Further, in the miniflow valve of the invention, liquid-touching parts may well be made of stainless steel.

Since the liquid-touching parts are made of the stainless steel in this manner, the miniflow valve can be employed without depending upon the sort of the liquid.

In accordance with the present invention, the opening and closure of the main valve are determined by the pilot valve which is opened and closed by the differential pressure between the discharge side pressure and suction side pressure of the liquid, so that the miniflow valve whose opening and closure are controllable at a high precision can be provided.

Besides, in the invention, the pilot valve including the diaphragm which is deformed by the differential pressure and which leads the liquid onto the side of the main valve is adopted, and the main valve is configured so as to be opened by the pressure of the liquid led by the diaphragm, whereby the miniflow valve operates by itself in the mechanical scheme, so that the miniflow valve can be provided inexpensively with the simple configuration.

### BRIEF DESCRIPTION OF THE SEVERAL VIEWS OF THE DRAWINGS

FIG. 1 is a schematic view showing a water supply equipment in which a miniflow valve according to an embodiment of the present invention is disposed;
FIG. 2 is a front view showing a miniflow valve according to an embodiment of the invention;
FIG. 3 is a vertical sectional view showing the valve closure mode of the miniflow valve in FIG. 2;
FIG. 4 is a vertical sectional view showing the valve opening mode of the miniflow valve in FIG. 2;
FIG. 5 is a vertical sectional view showing the wafer connection of the miniflow valve in FIG. 2; and
FIG. 6 is a graph showing the characteristic of a centrifugal pump.

### DETAILED DESCRIPTION OF THE INVENTION

Now, embodiments according to the present invention will be described with reference to the drawings.

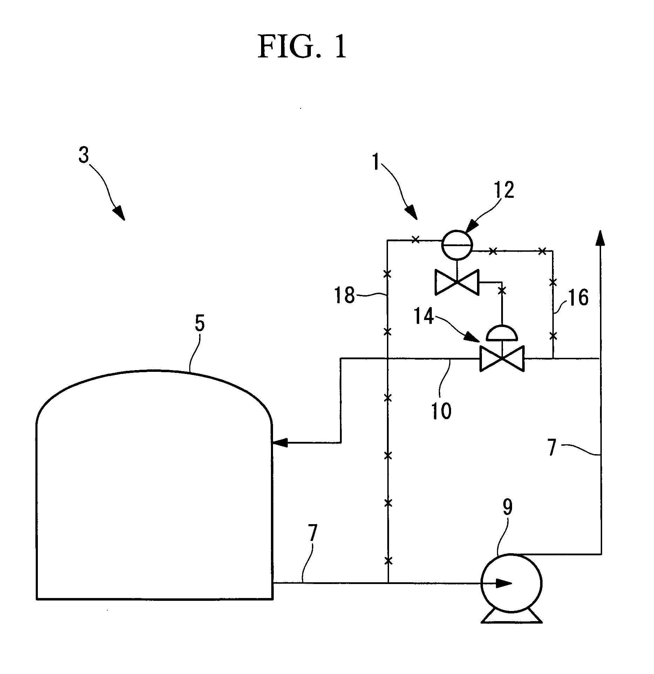

FIG. 1 shows the schematic configuration of a water supply equipment 3 in which a miniflow valve 1 according to one embodiment of the invention is disposed.

The water supply equipment 3 includes a feed water tank 5 in which water (a liquid) is stored, a feed water pipe (main pipe) 7 which is extended from the feed water tank 5 to a feed water destination (not shown), and a centrifugal pump 9 which is disposed in the feed water pipe 7, and which pumps up the water in the feed water tank 5 so as to feed the water under pressure toward the feed water destination.

The centrifugal pump 9 is driven to rotate by a drive motor not shown.

A miniflow pipe (bypass pipe) 10 is disposed between the feed water pipe 7 on the discharge side of the centrifugal pump 9 and the feed water tank 5. The miniflow valve 1 is disposed in the miniflow pipe 10.

The miniflow valve 1 includes a pilot valve portion 12, and a main valve portion 14. A discharge fluid introduction pipe 16 for leading the liquid on the discharge side of the centrifugal pump 9, and a suction fluid introduction pipe 18 for leading a fluid on the suction side of the centrifugal pump 9, are connected to the pilot valve portion 12. The valve of the pilot valve portion 12 is opened or closed on the basis of the differential pressure of the fluids led from the introduction pipes 16 and 18, and the valve of the main valve portion 14 is opened or closed correspondingly. By the way, in FIG. 1, the pilot valve portion 12 and main valve portion 14 of the miniflow valve 1 are separately shown. However, this illustrates respective functions in model-like fashion, and the pilot valve portion 12 and main valve portion 14 are configured of a unitary housing as will be explained later.

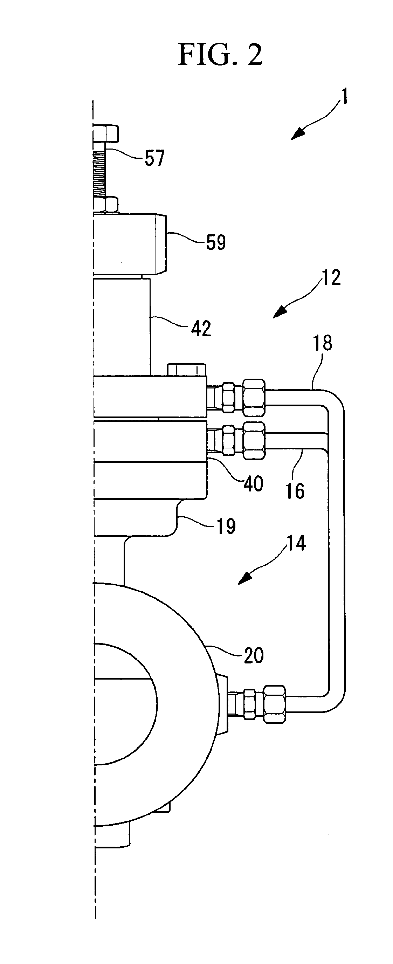

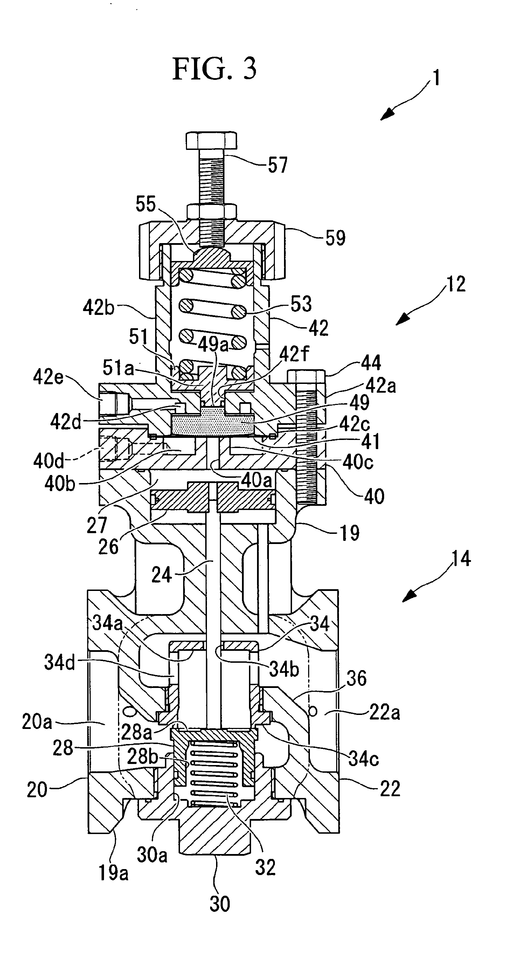

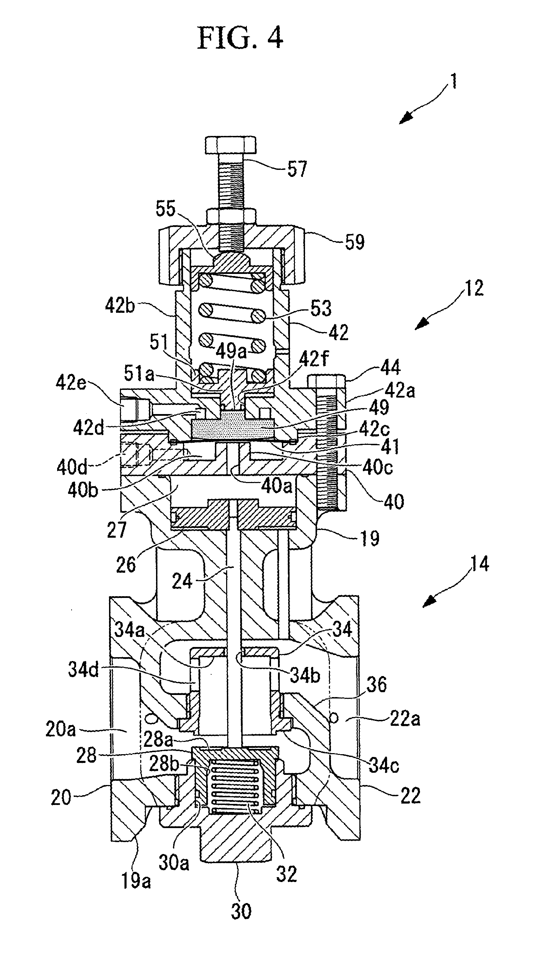

A front view of the miniflow valve 1 is shown in FIG. 2, and vertical sectional views of the miniflow valve 1 are shown in FIGS. 3 and 4. Besides, FIG. 3 shows the valve closure mode of the miniflow valve 1, while FIG. 4 shows the valve opening mode of the miniflow valve 1.

As shown in any of FIGS. 2 through 4, the miniflow valve 1 includes the main valve portion 14 which is connected to the miniflow pipe 10, and the pilot valve portion 12 which is connected over the main valve portion 14.

As shown in FIG. 3, a main-valve-portion body (housing) 19 which forms the external shape of the main valve portion 14 is provided with an inlet portion 20 into which the water flows from the miniflow pipe 10, and an outlet portion 22 from which the water flows out into the miniflow pipe 10. The inlet portion 20 and the outlet portion 22 are disposed in a state where they are juxtaposed in a horizontal direction in FIG. 3. The inlet portion 20 is formed with an inlet chamber 20a, while the outlet portion 22 is formed with an outlet chamber 22a. Incidentally, it is to be noted that, in each of FIGS. 3 and 4, the inlet portion 20 and the outlet portion 22 are respectively shown on a left side and a right side, reversely to those in FIG. 1.

In the main-valve-portion body 19, a valve rod 24 is arranged on a center axis orthogonal to the horizontal direction in which the inlet portion 20 and the outlet portion 22 are juxtaposed. A piston 26 is fixed to the upper end (one end) of the valve rod 24, while a main valve member 28 is fixed to the lower end (the other end) of the valve rod 24.

The piston 26 is arranged in a piston chamber 27 formed in the upper part of the main-valve-portion body 19, so as to be slidable in the direction of the center axis.

The main valve member 28 is in a bottomed cylindrical shape, and it is arranged in a state where its bottom 28a faces upward (onto the side of the valve rod 24). Part of the main valve member 28 on the side of the recess 28b thereof is accommodated in a recess 30a which is formed in the upper part of a lid 30 that is threadably engaged with the bottom 19a of the main-valve-portion body 19. The main valve member 28 reciprocates while sliding relative to the inner surface of the recess 30a, inside the recess 30a of the lid 30. A main-valve-member spring 32 is retained in a space which is defined by the recess 28b of the main valve member 28 and the recess 30a of the lid 30. The main-valve-member spring 32 is arranged in a state where it has the same axis as that of the valve rod 24, and it urges the main valve member 28 upwards (onto the side of the valve rod 24).

A valve seat 34 is disposed over the main valve member 28 (on the side of the valve rod 24). The valve seat 34 is in a bottomed cylindrical shape, and it is arranged in a state where its bottom 34a faces upwards. An aperture 34b is formed centrally of the bottom 34a of the valve seat 34, and the valve rod 24 is inserted through the aperture 34b. The open end 34c of the valve seat 34 is snugly fitted into a partition wall 36 which divides the inlet chamber 20a and the outlet chamber 22a. A plurality of circulation apertures 34d are formed in the sidewall of the valve seat 34 on the side of the bottom 34a thereof, so as to be spaced in the peripheral direction of the sidewall, and the water flows through the circulation apertures 34d. The end face of the main valve member 28 on the side of the bottom 28a thereof comes into and out of touch with the end face of the valve seat 34 on the side of the open end 34c thereof. A state (in FIG. 3) where the main valve member 28 comes into touch with the valve seat 34 is the valve closure state of the miniflow valve 1, whereas a state (in FIG. 4) where the main valve member 28 comes out of touch with the valve seat 34 is the valve opening state.

The pilot valve portion 12 has its external shape formed of a first pilot-valve-portion body (housing) 40 which is located on the side of the main valve portion 14, and a second pilot-valve-portion body (housing) 42 which is connected to the first pilot-valve-portion body (housing) 40. The first pilot-valve-portion body 40 is arranged between the main-valve-portion body 19 and the second pilot-valve-portion body 42. The main-valve-portion body 19, the first pilot-valve-portion body 40 and the second pilot-valve-portion body 42 are unitarily fixed by a plurality of bolts 44. Thus, the pilot valve portion 12 and the main valve portion 14 are unitarily configured.

A central aperture 40a having substantially the same axis as that of the valve rod 24 is formed centrally of the first pilot-valve-portion body 40. A discharge fluid introduction chamber 40b which is divided by a protrusion 40c is formed around the central aperture 40a. The upper end of the protrusion 40c is abuttable on a diaphragm 41 to be explained later. A discharge fluid led from the discharge fluid introduction pipe 16 (refer to FIG. 2) is introduced into the discharge fluid introduction chamber 40b through a discharge fluid introduction port 40d.

The second pilot-valve-portion body 42 has a flange part 42a located below, and a cylindrical part 42b located above.

The lower end of the flange part 42a (on the side of the first pilot-valve-portion body 40) is provided with a convexity 42c, which is snugly fitted into a concavity formed in the upper end of the first pilot-valve-portion body 40. In fit-engaging the convexity 42c of the flange part 42a and the first pilot-valve-portion body 40 in this manner, the periphery of the diaphragm 41 is pressed and fixed by the flange part 42a and the first pilot-valve-portion body 40.

A recess is formed centrally of the lower end of the flange part 42a, and a diaphragm receiver piece 49 is accommodated in the recess. The diaphragm receiver piece 49 reciprocates while sliding relative to the inner surface of the recess of the flange part 42a. The lower surface of the diaphragm receiver piece 49 abuts on the diaphragm 41.

A suction fluid introduction chamber 42d is formed in the second pilot-valve-portion body 42 located on the upper surface side of the diaphragm receiver piece 49. A suction fluid led from the suction fluid introduction pipe 18 (refer to FIG. 2) is introduced into the suction fluid introduction chamber 42d through a suction fluid introduction port 42e.

An upwardly protruding bulge 49a is formed centrally of the diaphragm receiver piece 49. The bulge 49a is accommodated in a central aperture 42f formed centrally of the flange part 42a, from below. A bulge 51a formed at the lower part of a lower spring receiver piece 51 is accommodated in the central aperture 42f, from above, and the lower end surface of the bulge 51a abuts on the upper end surface of the bulge 49a of the diaphragm receiver piece 49.

An adjustment coiled spring 53 having the same axis as that of the diaphragm receiver piece 49 is accommodated in the cylindrical part 42b of the second pilot-valve-portion body 42. The lower part of the adjustment coiled spring 53 is supported by the lower spring receiver piece 51, while the upper part of the adjustment coiled spring 53 is supported by an upper spring receiver piece 55.

An upwardly protruding bulge 55a is formed at the upper part of the upper spring receiver piece 55, and it abuts on the lower end of a regulation screw 57 located above. The regulation screw 57 is threadably engaged with the central part of an upper lid 59 which is threadably coupled to the upper end of the cylindrical part 42b. The regulation screw 57 is turned to be advanced or retracted in the vertical direction of the miniflow valve 1 relative to the upper lid 59, whereby the installation length of the adjustment coiled spring 53 can be altered. The urging force of the adjustment coiled spring 53 can be altered by altering the installation length of the adjustment coiled spring 53 in this manner. That is, it is possible to adjust the urging force which is transmitted to the diaphragm 41 through the lower spring receiver piece 51 as well as the diaphragm receiver piece 49. Accordingly, the operating pressure of the diaphragm 41, namely, the working differential pressure of a pilot valve can be finely adjusted.

The adjustment coiled spring 53 can be replaced by detaching the upper lid 59. Thus, the adjustment coiled spring 53 can be altered to one having a different spring force, thereby to greatly alter the force urging the diaphragm 41, so that the differential pressure at which the pilot valve works can be set in a wide range.

The liquid-touching parts of the above miniflow valve 1, such as the main-valve-portion body 19, second pilot-valve-portion body 42, diaphragm 41, diaphragm receiver piece 49, piston 26, main valve member 28 and valve seat 34, are made of stainless steel. Thus, the miniflow valve 1 can be employed without depending upon the sort of the liquid.

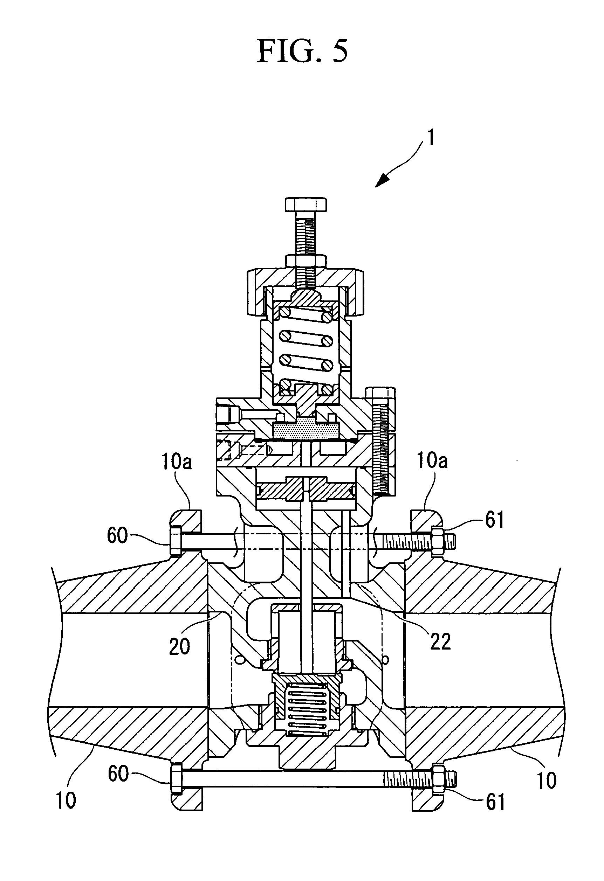

FIG. 5 shows a state where the miniflow valve 1 is wafer-connected. As shown in the figure, the miniflow pipe 10 is provided with two opposing flanges 10a, between which the miniflow valve 1 is arranged. Concretely, in a state where a flow passage in the miniflow pipe 10 and the flow passages of the inlet portion 20 and outlet portion 22 of the miniflow valve 1 are arranged so as to coincide, a plurality of long bolts 60 are insertedly passed between both the opposing flanges 10a, and they are fixed by nuts 61 at ends opposite thereto.

Owing to the wafer connection in which the miniflow valve 1 is connected in the state where it is held between both its sides in this manner, the miniflow valve 1 can be connected without depending upon the rating of the flanges of the miniflow pipe 10.

Besides, since the miniflow valve 1 need not be formed with the flanges, the weight of the miniflow valve 1 proper can be decreased, and the miniflow valve 1 can be provided inexpensively.

Next, the operation of the water supply equipment employing the miniflow valve 1 of the above configuration will be described.

As shown in FIG. 1, the water stored in the feed water tank 5 is supplied toward the feed water destination through the feed water pipe 7 by the centrifugal pump 9.

In a case where the head of the centrifugal pump 9 is the set value of the miniflow valve 1 or less, that is, where the differential pressure between the pressure of the discharge fluid of the centrifugal pump 9 and the pressure of the suction fluid thereof is a set differential pressure or below, the miniflow valve 1 is kept closed, and the water does not flow into the miniflow pipe 10. The differential pressure between the pressure of the discharge fluid of the centrifugal pump 9 and the pressure of the suction fluid thereof is obtained in the pilot valve portion 12 of the miniflow valve 1 from the fluids which are led from the discharge fluid introduction pipe 16 and the suction fluid introduction pipe 18.

Concretely, as shown in FIG. 3, the fluid from the discharge fluid introduction pipe 16 is led toward the discharge fluid introduction chamber 40b through the discharge fluid introduction port 40d. The fluid from the suction fluid introduction pipe 18 is led toward the suction fluid introduction chamber 42d through the suction fluid introduction port 42e. On this occasion, an upward force based on the pressure inside the discharge fluid introduction chamber 40b acts on the diaphragm 41. On the other hand, the resultant force of a downward force based on the pressure inside the suction fluid introduction chamber 42d and a downward force from the adjustment coiled spring 53 acts on the diaphragm 41. In the case where the head of the centrifugal pump 9 is the predetermined value or less, the downward force acting on the diaphragm 41 overcomes the upward force. Therefore, the diaphragm 41 is pressed downwards by the diaphragm receiver piece 49 until it abuts on the upper end of the protrusion 40c. That is, the pilot valve which is configured of the diaphragm 41 and the protrusion 40c is closed. In this case, the fluid inside the discharge fluid introduction chamber 40b does not flow toward the piston chamber 27 through the central aperture 40a, and hence, a force pressing the piston 26 downwards doe not act on this piston 26. On the other hand, the main valve member 28 is fixed to that other end (lower end) of the valve rod 24 to which the piston 26 is fixed, and this main valve member 28 is urged upwards by the main-valve-member spring 32. Accordingly, the main valve member 28 comes into touch with the valve seat 34 and closes up the flow passage, and the fluid in the inlet chamber 20a does not flow toward the outlet chamber 22a.

Next, a case where the head of the centrifugal pump 9 has increased will be described.

If, in a case where the feed water destination has been closed up, the running of the centrifugal pump 9 is continued as it is, a flowrate will decrease, and the head of the centrifugal pump 9 will increase. In addition, in a case where the head of the centrifugal pump 9 has exceeded the set value of the miniflow valve 1, that is, where the differential pressure between the discharge fluid and suction fluid of the centrifugal pump 9 has exceeded the set differential pressure, the miniflow valve 1 is opened, the water is caused to flow into the miniflow pipe 10 and is returned toward the feed water tank 5. Thus, the minimum flowrate for protecting the centrifugal pump 9 is ensured.

On this occasion, the miniflow valve 1 operates as stated below. As shown in FIG. 4, when the head becomes large, the pressure of the discharge fluid enlarges, and the pressure inside the discharge fluid introduction chamber 40b rises. Thus, a force pressing the diaphragm 41 upwards increases, and it eventually overcomes the resultant force of the downward force based on the pressure inside the suction fluid introduction chamber 42d and the downward force from the adjustment coiled spring 53 until the diaphragm 41 comes away from the upper end of the protrusion 40c. That is, the pilot valve which is configured of the diaphragm 41 and the protrusion 40c is opened. Then, the fluid in the discharge fluid introduction chamber 40b flows into the piston chamber 27 through the central aperture 40a, and a force pressing the piston 26 downwards is exerted on this piston 26. The force pressing the piston 26 downwards owing to the pressure based on the discharge fluid overcomes the force with which the main-valve-member spring 32 presses the piston 26 upwards through the main valve member 28 as well as the valve rod 24, so that the piston 26 is pressed downwards. Thus, the main valve member 28 comes away from the valve seat 34 and forms the flow passage, so that the fluid in the inlet chamber 20a flows into the outlet chamber 22a.

Besides, in a case where the head of the centrifugal pump 9 decreases to become less than the valve-opening set value of the miniflow valve 1, the upward force acting on the diaphragm 41 becomes smaller than the downward force, and the diaphragm 41 comes into touch with the protrusion 40c. Thus, the fluid in the discharge fluid introduction chamber 40b is prevented from flowing into the piston chamber 27 through the central aperture 40a, and hence, the force pressing the piston 26 downwards weakens. Accordingly, the piston 26 is pressed upwards by the force of the main-valve-member spring 32, and the main valve member 28 comes into touch with the valve seat 34, thereby to close the valve.

As described above, in accordance with the embodiments, advantages to be stated below are attained.

A pilot valve is configured including a diaphragm 41 which is deformed by the differential pressure between the discharge side pressure and suction side pressure of a centrifugal pump 9, and the opening or closure of a main valve member 28 is determined by the opening or closure of the pilot valve, so that the differential pressure at which a miniflow valve 1 works can be adjusted at a high precision. Accordingly, the precision can be made remarkably higher than that of a safety valve or an automatic pressure regulation valve which is directly driven by the pressure of a fluid discharged from the centrifugal pump 9.

Besides, the miniflow valve 1 in the embodiments is so configured as to adopt the pilot valve including the diaphragm 41 which is deformed by the differential pressure and which leads a fluid into a piston chamber 27, and to open the main valve member 28 by pressing a piston 26 downwards by the pressure of the fluid led from the diaphragm 41, whereby the miniflow valve 1 operates by itself in a mechanical scheme. Accordingly, an electric control need not be performed using an output signal from a flowrate sensor or a pressure sensor, so that the miniflow valve 1 can be provided inexpensively with the simple configuration.

Besides, the pilot valve and a main valve are arranged in a common housing by connecting a pilot valve portion 12 and a main valve portion 14, so that the miniflow valve 1 can be configured into a compact structure.

By the way, in the embodiments, water has been described as an example of the fluid, the present invention is applicable also in case of another liquid.

## Claims

1. A miniflow valve which is disposed in a bypass pipe that is connected between a discharge side and a suction side of a main pipe where a liquid fed under pressure by a pump circulates, and which is opened when a head of the pump has exceeded a predetermined value, thereby to return the liquid from the discharge side onto the suction side through the bypass pipe, comprising:
a pilot valve which is opened and closed on the basis of a differential pressure between a discharge side pressure and a suction side pressure of the liquid, and a main valve which is opened and closed in accordance with opening and closing operations of the pilot valve.

2. A miniflow valve as defined in claim 1, wherein:
the pilot valve includes a diaphragm which is deformed when the differential pressure has exceeded the predetermined value, whereby the liquid is caused to flow onto a side of the main valve; and
the main valve is opened by a pressure of the liquid led by the diaphragm.

3. A miniflow valve as defined in claim 1, wherein the pilot valve and the main valve are arranged in a common housing.

4. A miniflow valve as defined in claim 2, further comprising a diaphragm receiver piece which abuts on one side of the diaphragm;
wherein the diaphragm receiver piece is urged toward the diaphragm by an elastic member.

5. A miniflow valve as defined in claim 4, wherein an urging force based on the elastic member is adjustable by altering an installation length of the elastic member.

6. A miniflow valve as defined in claim 4, wherein the elastic member is replaceable.

7. A miniflow valve as defined in claim 1, further comprising a wafer connection structure in which the miniflow valve proper is connected with both its sides held by flanges that are disposed in the bypass pipe.

8. A miniflow valve as defined in claim 1, wherein liquid-touching parts are made of stainless steel.
